# EUROPÄISCHE PATENTSCHRIFT

(11) **EP 2 075 177 B1**
(45) Veröffentlichungstag und Bekanntmachung des Hinweises auf die Patenterteilung: **20.02.2013**
(21) Anmeldenummer: 08020812.7
(22) Anmeldetag: 01.12.2008
(51) Int. Cl.: B62H 5/18

(54) **Bremsscheibenschloss**
Brake disk lock
Serrure de frein à disques

(30) Priorität: 05.12.2007 DE 102007058551
(43) Veröffentlichungstag der Anmeldung: 01.07.2009
(73) Patentinhaber: ABUS August Bremicker Söhne KG, 58300 Wetter-Volmarstein (DE)
(72) Erfinder:
(74) Vertreter: Manitz, Finsterwald & Partner GbR

(56) Entgegenhaltungen:
- WO-A1-2007/010580
- CN-Y- 2 229 901
- DE-A1-102005 043 926
- NL-C1- 1 024 679

## Beschreibung

Die vorliegende Erfindung betrifft ein Bremsscheibenschloss mit einem Aufnahmespalt zur Aufnahme einer Bremsscheibe und mit einem Sicherungsabschnitt zum Verschließen des Aufnahmespalts.

Ein derartiges Bremsscheibenschloss dient zum Sichern beispielsweise eines Motorrads, eines Motorrollers oder eines Quads gegen eine unbefugte Benutzung. Hierfür wird das Schloss derart an eine Bremsscheibe des geparkten Fahrzeugs angelegt, dass die Bremsscheibe in den Aufnahmespalt hineinragt. Daraufhin wird der Sicherungsabschnitt durch Betätigung des Schlosses in eine Stellung bewegt, in der der Sicherungsabschnitt den Aufnahmespalt durchquert und dabei durch eine Öffnung der Bremsscheibe geführt ist. In dieser Stellung wird der Sicherungsabschnitt verriegelt. Hierdurch ist das Schloss an der Bremsscheibe verschlossen und die Benutzung des Fahrzeugs wird verhindert, bis das Schloss wieder von der Bremsscheibe gelöst wird.

In der DE 10 2005 043 926 A1 ist ein Bremsscheibenschloss der eingangs genannten Art gezeigt, bei dem der Sicherungsabschnitt als ein Riegelabschnitt eines Schließbolzens ausgebildet ist. Um das Schloss auf eine Bremsscheibe aufsetzen zu können, befindet sich der Schließbolzen zunächst in einer Freigabestellung. In dieser Freigabestellung ragt eine Oberseite des Schließbolzens aus einer Oberseite eines oberen Gehäuseabschnitts des Schlosses heraus. Ausgehend von dieser Freigabestellung wird der Schließbolzen entlang seiner Längsachse nach unten bewegt, um mit dem Riegelabschnitt den Aufnahmespalt zu verschließen. Zur Verriegelung des Schlosses wird der nach unten bewegte Schließbolzen dann noch um seine Längsachse gedreht. Um das Schloss für eine Entnahme von der Bremsscheibe freizugeben, werden zunächst der Schließbolzen wieder zurückgedreht und anschließend der Schließbolzen axial nach oben zurückgezogen.

Die Handhabung des Bremsscheibenschlosses der DE 10 2005 043 926 A1 ist jedoch vergleichsweise aufwendig, da mit der einen Hand das Schloss gehalten und mit der anderen Hand der Schließbolzen axial verfahren und um seine Längsachse gedreht werden muss.

Es ist Aufgabe der Erfindung, ein Bremsscheibenschloss der eingangs genannten Art zu schaffen, das eine vereinfachte Handhabbarkeit besitzt.

Diese Aufgabe wird durch ein Bremsscheibenschloss mit den Merkmalen des Anspruchs 1 gelöst, und insbesondere durch ein Bremsscheibenschloss mit einer betätigbaren Gehäuseschale, einem Abstützabschnitt, einem Hintergreifungsbügel, und einem Sicherungsabschnitt, wobei der Abstützabschnitt und der Hintergreifungsbügel einen Aufnahmespalt zur Aufnahme einer Bremsscheibe begrenzen, wobei die Gehäuseschale bezüglich des Aufnahmespalts auf derselben Seite angeordnet ist wie der Abstützabschnitt und an dem Abstützabschnitt beweglich gelagert ist, und wobei die Gehäuseschale, der Abstützabschnitt und der Sicherungsabschnitt derart zusammenwirken, dass durch eine Bewegung der Gehäuseschale relativ zu dem Abstützabschnitt in Richtung des Aufnahmespalts die Gehäuseschale aus einer Freigabestellung in eine Sicherungsstellung bewegbar ist, um den Aufnahmespalt mittels des Sicherungsabschnitts zu verschließen.

Das erfindungsgemäße Bremsscheibenschloss weist also einen Abstützabschnitt auf. Über den Abstützabschnitt kann das Bremsscheibenschloss an eine Bremsscheibe angedrückt werden. Der Hintergreifungsbügel hintergreift dabei die Bremsscheibe, so dass die Bremsscheibe in dem von dem Abstützabschnitt und dem Hintergreifungsbügel gebildeten Aufnahmespalt aufgenommen ist. Die Gehäuseschale ist an dem Abstützabschnitt beweglich gelagert und kann relativ zu dem Abstützabschnitt bewegt werden. Beim Andrücken des Bremsscheibenschlosses an die aufgenommene Bremsscheibe kann die bezüglich der Bremsscheibe auf derselben Seite wie der Abstützabschnitt befindliche Gehäuseschale aus der Freigabestellung in Richtung des Aufnahmespalts bewegt werden, wodurch ein Verschließen des Aufnahmespalts durch den Sicherungsabschnitt des Schlosses erreicht wird. Das Andrücken des Bremsscheibenschlosses an die Bremsscheibe zum Verschließen des Aufnahmespalts ist durch das Vorsehen des Betätigungsmittels in Form einer Gehäuseschale mit lediglich einer Hand und damit besonders einfach ausführbar.

Unter einer Gehäuseschale ist im Zusammenhang mit der Erfindung ein äußeres Gehäuseteil zu verstehen, das andere Teile des Bremsscheibenschlosses zumindest bereichsweise bedeckt oder von mehreren Seiten überdeckt. Insbesondere kann die Gehäuseschale ein teilweise geöffneter Hohlkörper sein, der andere Teile des Bremsscheibenschlosses zumindest bereichsweise umgibt.

Nach einer Ausbildung der Erfindung ist die Gehäuseschale verschwenkbar an dem Abstützabschnitt gelagert. Das Bremsscheibenschloss kann dann nach Art eines Standard-Büro-Heftgeräts (bzw. Tackers) bedient werden. Als Schwenkachse kann beispielsweise ein Bolzen oder ein Niet dienen, der durch entsprechende Bohrungen in der Gehäuseschale und dem Abstützabschnitt hindurchgesteckt ist. Die Schwenkachse kann aber auch durch jede andere schwenkbare Lagerung, insbesondere ohne Welle, realisiert sein.

Die Gehäuseschale kann relativ zu dem Abstützabschnitt und/oder dem Hintergreifungsbügel in Richtung der Freigabestellung vorgespannt sein. Dies erleichtert die Entnahme eines an einer Bremsscheibe angebrachten Bremsscheibenschlosses, da dann der Benutzer des Bremsscheibenschlosses nicht aktiv dafür sorgen muss, dass der Sicherungsabschnitt den Aufnahmespalt wieder freigibt, sondern dies durch die Vorspannung der Gehäuseschale automatisch gewährleistet wird, beispielsweise mittels wenigstens einer Druckfeder, die innerhalb der Gehäuseschale aufgenommen ist und gegen eine Innenwand der Gehäuseschale drückt. Die einfache Handhabbarkeit des Bremsscheibenschlosses wird dadurch noch weiter verbessert.

Gemäß einer optionalen Weiterbildung kann in der Freigabestellung und/oder der Sicherungsstellung eine Bremsscheibenerkennungseinrichtung, die insbesondere dem Abstützabschnitt des Schlosses entspricht, und/oder eine Alarmeinrichtung mit einem Bewegungssensor zumindest teilweise in der Gehäuseschale aufgenommen sein. Unter einem Bewegungssensor ist ein Sensor zu verstehen, der eine Beschleunigung, eine Erschütterung, eine Lageänderung oder eine sonstige Bewegung des Schlosses detektiert. Wenn der Bewegungssensor eine derartige Bewegung detektiert, gibt die Alarmeinrichtung - sofern diese aktiviert ist - ein akustisches und/oder optisches Alarmsignal aus. Diese Alarmfunktion dient zum einen dazu, den befugten Benutzer des Fahrzeugs vor dem Losfahren gegebenenfalls daran zu erinnern, dass sich das Schloss noch an der Bremsscheibe befindet. Zum anderen erfüllt die Alarmeinrichtung auch eine Diebstahlwarnfunktion, da Aufbruchversuche zwangsläufig mit einer gewissen Bewegung oder Erschütterung des Bremsscheibenschlosses verbunden sind. Bevorzugt wird bei einer Bewegung des Bremsscheibenschlosses das Alarmsignal nicht sofort ausgelöst, um dem befugten Benutzer ausreichend Zeit zum Anlegen und Entnehmen des Bremsscheibenschlosses von der Bremsscheibe zu geben. Um die Alarmeinrichtung automatisch zu aktivieren und zu deaktivieren, kann eine Bremsscheibenerkennungseinrichtung vorgesehen sein, die überprüft, ob sich eine Bremsscheibe gerade in der Bremsscheibenaufnahme befindet, wobei zutreffendenfalls die Alarmeinrichtung aktiviert und andernfalls die Alarmeinrichtung deaktiviert ist.

Nach einer anderen Ausgestaltung der Erfindung ist ein Riegel vorgesehen, wobei der Sicherungsabschnitt in der Sicherungsstellung der Gehäuseschale - d.h. wenn der Aufnahmespalt mittels des Sicherungsabschnitts verschlossen ist - mittels des Riegels (z.B. durch eine Automatikfunktion) verriegelt oder (z.B. durch eine Betätigung durch einen Benutzer) verriegelbar ist. Durch die Verriegelung des Sicherungsabschnitts wird ein unbefugtes Freigeben des Aufnahmespalts verhindert. Der Riegel kann beispielsweise über einen Schließzylinder des Schlosses, insbesondere über eine mit dem Schließzylinder antriebswirksam verbundene Mitnehmereinrichtung, betätigt werden. Der Riegel kann von der Mitnehmereinrichtung separat oder aber mit dieser einstückig ausgebildet sein. Optional bewirkt der Riegel - zumindest indirekt - zugleich ein Verriegeln der Gehäuseschale in der Sicherungsstellung, so dass der Riegel die Gehäuseschale in der herabgedrückten Stellung hält, während der Sicherungsabschnitt (z.B. Schließbolzen) den Aufnahmespalt verschließt.

Der Riegel ist bevorzugt innerhalb der Gehäuseschale angeordnet. Durch die Aufnahme in der Gehäuseschale ist der Riegel gegen einen Aufbruchversuch gut geschützt, da die Gehäuseschale als eine Abschirmung nach außen hin wirken kann. Alternativ oder zusätzlich zu dem Riegel kann innerhalb der Gehäuseschale, insbesondere in einem in der Gehäuseschale aufgenommenen Innengehäuse, auch ein Schließzylinder vorgesehen sein. Das Innengehäuse kann weiteren Schutz bieten. Darüber hinaus kann mittels des Innengehäuses auf einfache Weise eine sichere Lagerung und/oder Befestigung des Schließzylinders innerhalb der Gehäuseschale gewährleistet werden.

Beispielsweise ist der Riegel durch Betätigung des Schließzylinders zwischen einer unverriegelnden Auslenkposition und einer verriegelnden Ruheposition bewegbar. Der Riegel kann aber auch aufgrund einer Automatikfunktion in die verriegelnde Ruheposition bewegbar sein. Die Automatikfunktion zeichnet sich insbesondere dadurch aus, dass bei der Bewegung der Gehäuseschale in die Sicherungsstellung der Riegel, gegebenenfalls nach vorheriger Auslenkung aus der verriegelnden Ruheposition in Richtung der unverriegelnden Auslenkposition, automatisch in die verriegelnde Ruheposition bewegt wird, ohne dass hierfür eine Betätigung des Schließzylinders nötig ist. Zur Realisierung der Automatikfunktion kann der Riegel in die verriegelnde Ruheposition vorgespannt sein. In der unverriegelnden Auslenkposition kann die Gehäuseschale von der Sicherungsstellung in die Freigabestellung bewegt werden, wohingegen in der verriegelnden Ruheposition eine derartige Bewegung der Gehäuseschale unterbunden ist.

Nach einer weiteren Ausbildung der Erfindung ist der Riegel und/oder der Schließzylinder bezüglich der Drehachse des Schließzylinders axialfest innerhalb der Gehäuseschale, insbesondere in einem in der Gehäuseschale aufgenommenen Innengehäuse, gelagert. Der Riegel bzw. der Schließzylinder können dann jeweils nur eine Drehbewegung und/oder Translationsbewegung in einer Ebene senkrecht zu der Drehachse des Schließzylinders ausführen. Sofern das Zylindergehäuse des Schließzylinders, insbesondere über ein Innengehäuse, starr und/oder fest mit der Gehäuseschale verbunden ist, kann hierdurch erreicht werden, dass der Riegel und/oder der Schließzylinder bei der Bewegung der Gehäuseschale dieselbe Bewegung wie die Gehäuseschale ausführt.

Die Gehäuseschale kann als eine Handhabe ausgebildet sein, die in der Freigabestellung und/oder der Sicherungsstellung zumindest einen Teil des Abstützabschnitts umgibt. In der Ausbildung als Handhabe ist die Gehäuseschale mit einer Hand des Benutzers erfassbar und betätigbar.

Der Abstützabschnitt und der Hintergreifungsbügel, oder zumindest ein Teil hiervon, können einstückig ausgebildet und/oder starr miteinander verbunden sein. Alternativ hierzu kann der Hintergreifungsbügel verschwenkbar, insbesondere begrenzt verschwenkbar, an dem Abstützabschnitt gelagert sein. Der Hintergreifungsbügel, die Gehäuseschale und der Abstützabschnitt können in diesem Fall auch eine gemeinsame Schwenkachse aufweisen.

Sofern der Hintergreifungsbügel verschwenkbar an dem Abstützabschnitt gelagert ist und der Abstützabschnitt Mitnehmermittel umfasst, kann bei der Bewegung der Gehäuseschale relativ zu dem Abstützabschnitt eine entsprechende Bewegung des Hintergreifungsbügels relativ zu der Gehäuseschale bewirkt werden, um den Aufnahmespalt durch den Sicherungsabschnitt zu verschließen.

In allen Fällen können der Abstützabschnitt und der Hintergreifungsbügel eine U-förmige Anordnung für den Aufnahmespalt bilden.

Der Sicherungsabschnitt kann als ein Schließbolzen ausgebildet sein, der mit der Gehäuseschale in axialer Richtung antriebswirksam gekoppelt ist, insbesondere über ein in der Gehäuseschale aufgenommenes Innengehäuse. Der Schließbolzen kann hierdurch mit der Bewegung der Gehäuseschale in die Sicherungsstellung in den Aufnahmespalt bewegt werden, um diesen zu verschließen. Der Schließbolzen kann dann in eine in dem Hintergreifungsbügel ausgebildete Ausnehmung eingreifen. Alternativ kann der Sicherungsabschnitt an dem freien Ende des Hintergreifungsbügels vorgesehen sein, insbesondere hieran einstückig ausgebildet sein. Das freie Ende des Hintergreifungsbügels kann in der Sicherungsstellung dann beispielsweise mit einem innerhalb der Gehäuseschale angeordneten Riegel zusammenwirken.

Weitere Ausführungsformen der Erfindung sind in den Unteransprüchen beschrieben.

Die Erfindung wird nachfolgend anhand zweier Ausführungsformen mit Bezug auf die Zeichnung beschrieben. In dieser zeigt:
- Fig. 1: ein erfindungsgemäßes Bremsscheibenschloss gemäß einer ersten Ausführungsform der Erfindung, mit einer Gehäuseschale und einem Druckschalter, wobei die Gehäuseschale sich in einer Freigabestellung befindet und der Druckschalter unbetätigt ist, in verschiedenen Ansichten,
- Fig. 2: das Bremsscheibenschloss von Fig. 1, wobei die Gehäuseschale sich in einer Sicherungsstellung befindet und der Druckschalter unbetätigt ist, in verschiedenen Ansichten,
- Fig. 3: das Bremsscheibenschloss von Fig. 1, wobei die Gehäuseschale sich in einer Sicherungsstellung befindet und der Druckschalter betätigt ist, in verschiedenen Ansichten,
- Fig. 4: das Bremsscheibenschloss von Fig. 1, in einer Explosionsansicht,
- Fig. 5: das Bremsscheibenschloss von Fig. 1, mit einem Riegel, der sich in einer verriegelnden Ruheposition befindet, in einer Querschnittsansicht,
- Fig. 6: einen Schlosskörper des Bremsscheibenschlosses von Fig. 1, in einer Perspektivansicht,
- Fig. 7: das Bremsscheibenschloss von Fig. 1, mit einem Riegel, der sich in einer unverriegelnden Auslenkposition befindet, wobei gegenüber Fig. 1 die Gehäuseschale und ein Schlosskörper des Bremsscheibenschlosses weggelassen sind, in einer Perspektivansicht,
- Fig. 8: das Bremsscheibenschloss von Fig. 1, mit zwei Druckfedern, wobei gegenüber Fig. 1 die Gehäuseschale weggelassen ist, in einer Perspektivansicht,
- Fig. 9: das Bremsscheibenschloss von Fig. 1, mit zwei Druckfedern, wobei gegenüber Fig. 1 die Gehäuseschale weggelassen ist, in einer Perspektivansicht,
- Fig. 10: ein erfindungsgemäßes Bremsscheibenschloss gemäß einer zweiten Ausführungsform der Erfindung, mit einer Gehäuseschale und einem Druckschalter, wobei die Gehäuseschale sich in einer Freigabestellung befindet und der Druckschalter unbetätigt ist, in verschiedenen Ansichten,
- Fig. 11: das Bremsscheibenschloss von Fig. 10, wobei die Gehäuseschale sich in einer Sicherungsstellung befindet und der Druckschalter unbetätigt ist, in verschiedenen Ansichten,
- Fig. 12: das Bremsscheibenschloss von Fig. 10, wobei die Gehäuseschale sich in einer Sicherungsstellung befindet und der Druckschalter betätigt ist, in verschiedenen Ansichten,
- Fig. 13: das Bremsscheibenschloss von Fig. 10, in einer Explosionsansicht,
- Fig. 14: einen Schließzylinder, einen Mitnehmer und einen Riegel des Bremsscheibenschlosses von Fig. 10, wobei der Riegel sich in einer verriegelnden Ruheposition befindet, in verschiedenen Ansichten,
- Fig. 15: einen Schließzylinder, einen Mitnehmer und einen Riegel des Bremsscheibenschlosses von Fig. 10, wobei der Riegel sich in einer unverriegelnden Auslenkposition befindet, in verschiedenen Ansichten, und
- Fig. 16: das Bremsscheibenschloss von Fig. 10, mit einem Arretiermechanismus, wobei gegenüber Fig. 10 Teile des Bremsscheibenschlosses weggelassen sind.

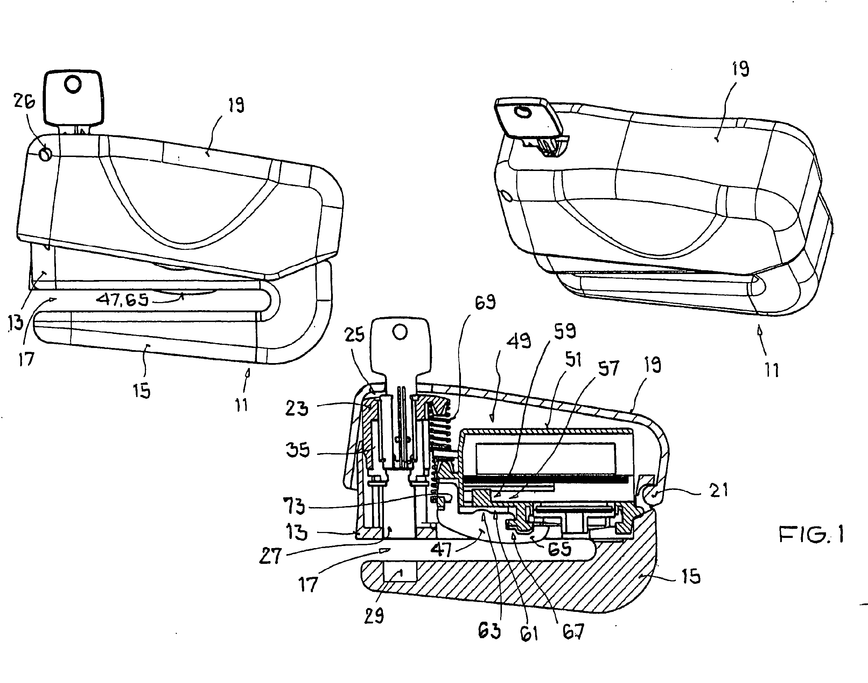

Das in den Fig. 1 bis 9 gezeigte Bremsscheibenschloss gemäß einer ersten Ausführungsform der Erfindung besitzt einen Schlosskörper 11 mit einem im Wesentlichen U-förmigen Aufbau. Der eine Schenkel dieser U-Form bildet einen Abstützabschnitt 13, mit dem das Bremsscheibenschloss gegen eine nicht dargestellte Bremsscheibe eines Motorrads oder dergleichen gedrückt werden kann, und der andere U-Schenkel bildet einen Hintergreifungsbügel 15. Der Abstützabschnitt 13 und der Hintergreifungsbügel 15 verlaufen im Wesentlichen parallel zueinander, und sie begrenzen einen Aufnahmespalt 17 zur Aufnahme der vorstehend genannten Bremsscheibe. Der Abstützabschnitt 13 und der Hintergreifungsbügel 15 sind dabei einstückig ausgebildet.

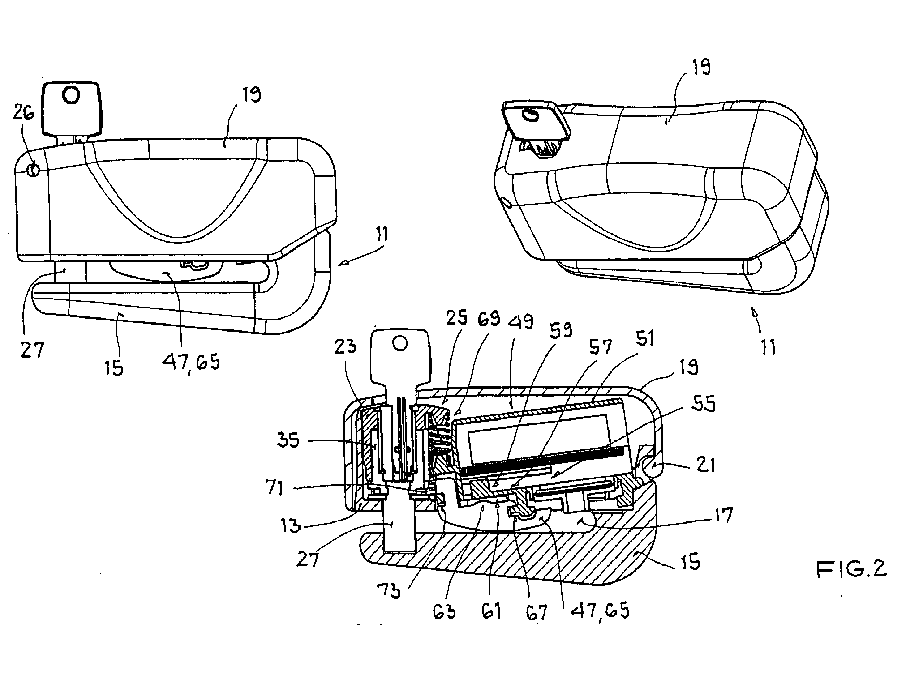

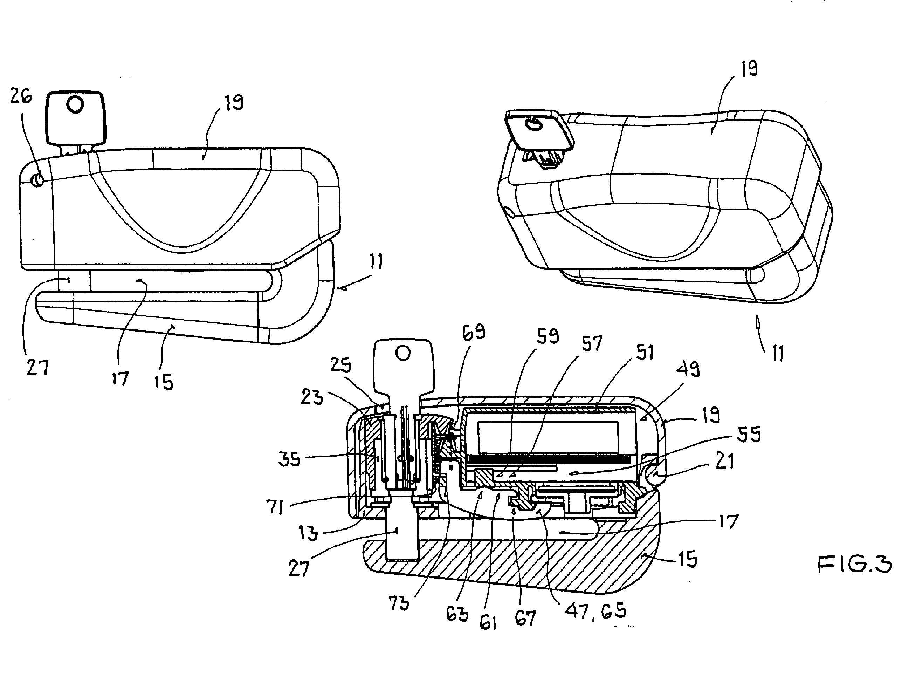

Darüber hinaus umfasst das Bremsscheibenschloss einen Betätigungsabschnitt, der als eine betätigbare Gehäuseschale 19 ausgebildet ist, die als eine Handhabe für einen Benutzer des Bremsscheibenschlosses fungiert. Die Gehäuseschale 19 und der Hintergreifungsbügel 15 sind bezüglich des Aufnahmespalts 17 auf verschiedenen Seiten angeordnet. Die Gehäuseschale 19, die sich also auf derselben Seite wie der Abstützabschnitt 13 befindet, ist schwenkbar an dem Abstützabschnitt 13 gelagert. Die Gehäuseschale 19 kann daher relativ zu dem Schlosskörper 11 aus einer Freigabestellung (Fig. 1) um eine Schwenkachse 21 in eine Sicherungsstellung (Fig. 2, 3) verschwenkt werden. Der Abstützabschnitt 13 ist in der Freigabestellung teilweise und in der Sicherungsstellung vollständig in der Gehäuseschale 19 aufgenommen.

Die Gehäuseschale 19 umschließt an ihrem freien Schwenkende ein Innengehäuse 23, in dem wiederum ein Schließzylinder 25 aufgenommen ist. Das Innengehäuse 23 ist innerhalb des Abstützabschnitts 13 verschieblich gelagert und ist mittels eines Haltezapfens 26 an der Gehäuseschale 19 angelenkt. Der Schließzylinder 25 ist bezüglich seiner Drehachse axialfest innerhalb des Innengehäuses 23 gelagert. In axialer Verlängerung des Schließzylinders 25 ist ein Sicherungsabschnitt des Schlosses vorgesehen, der hier als ein Schließbolzen 27 ausgebildet ist. Der Schließbolzen 27, der aus der Gehäuseschale 19 hervorsteht und in der Freigabestellung in Richtung des Aufnahmespalts 17 zeigt, ist dafür vorgesehen, in der Sicherungsstellung den in Fig. 1 offenen Aufnahmespalt 17 zu verschließen (Fig. 2, 3). Der Schließbolzen 27 ist über das Innengehäuse 23 mit der Gehäuseschale 19 verbunden.

Wird die Gehäuseschale 19 relativ zu dem Abstützabschnitt 13 aus der Freigabestellung (Fig. 1) in Richtung des Aufnahmespalts 17 in die Sicherungsstellung (Fig. 2, 3) bewegt bzw. geschwenkt, wird dabei gleichzeitig auch der Schließbolzen 27 in Richtung des Aufnahmespalts 17 gedrängt und durch diesen hindurch bewegt, um diesen in einer Verschlussstellung zu verschließen. In der Verschlussstellung greift der Schließbolzen 27 in eine in dem Hintergreifungsbügel 15 ausgebildete Ausnehmung 29 ein. Ein besonderer Vorteil des gezeigten Schlosses besteht somit darin, dass allein durch Andrücken der Gehäuseschale 19 gegen den sich an der Bremsscheibe abstützenden Abstützabschnitt 13 der Aufnahmespalt 17 mittels des Schließbolzens 27 verschlossen wird. Sofern zusätzlich die nachfolgend noch erläuterte Automatikfunktion verwirklicht ist, wird durch die Andrückbewegung der Gehäuseschale 19 zugleich das Schloss an der Bremsscheibe gesichert. Die Handhabung des Schlosses ist somit besonders einfach.

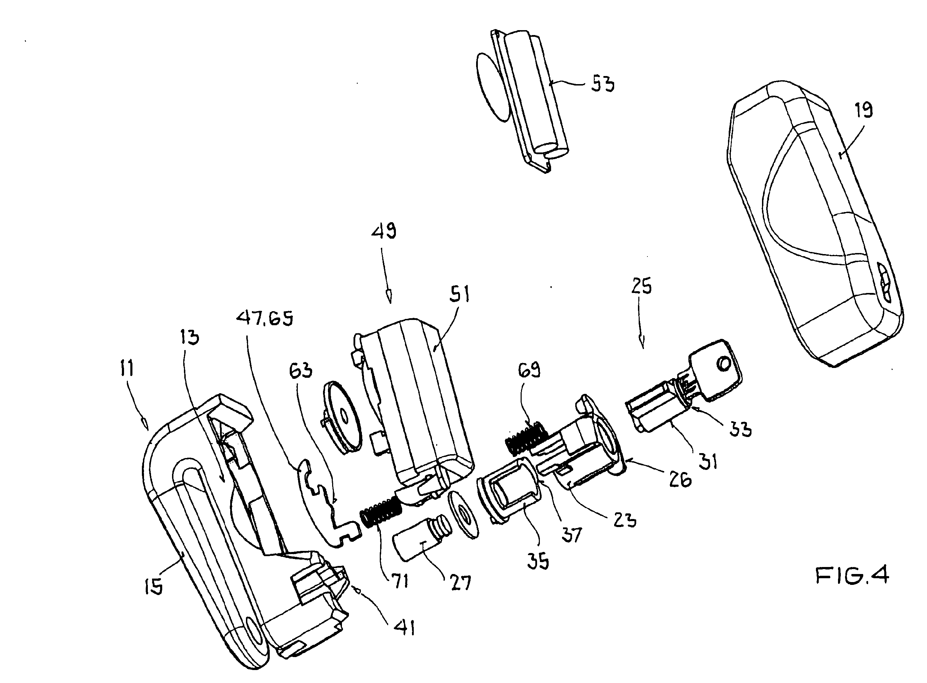

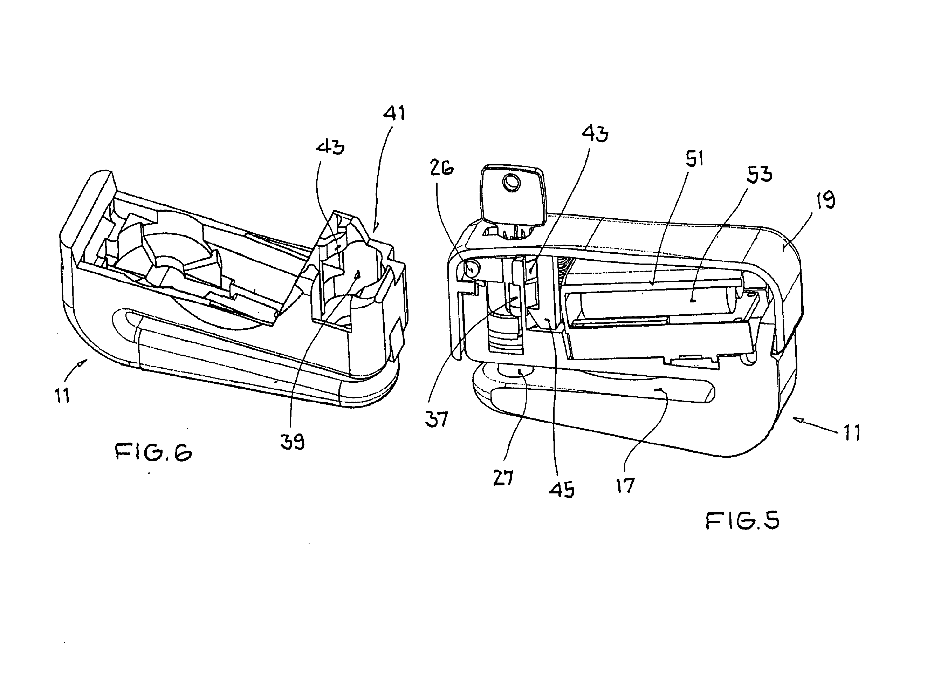

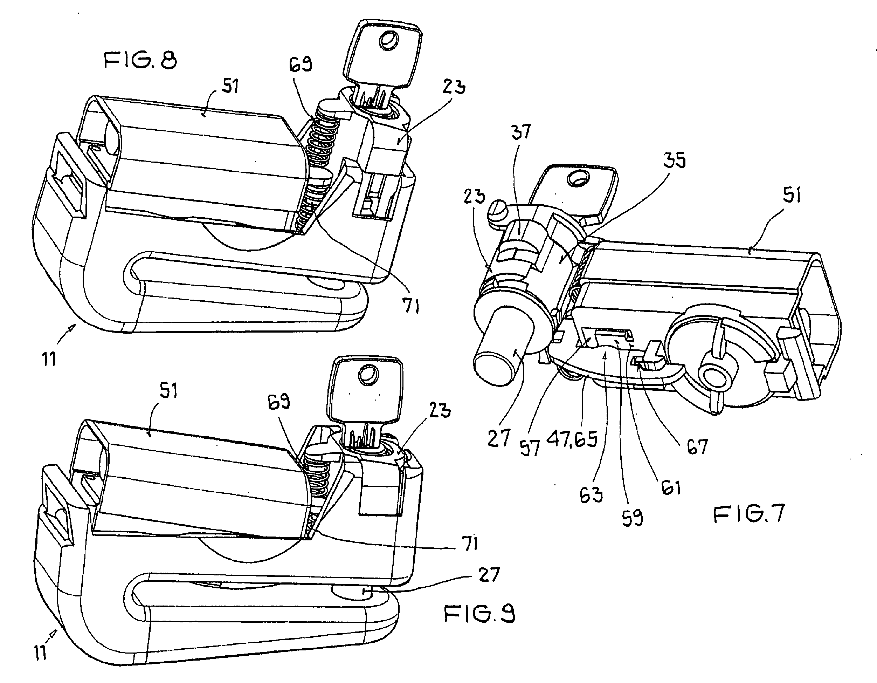

Der Schließzylinder 25 umfasst ein Zylindergehäuse 31 und einen innerhalb des Zylindergehäuses 31 angeordneten drehbeweglichen Zylinderkern 33 (Fig. 4). Das Zylindergehäuse 31 ist fest mit dem Innengehäuse 23 verbunden. Der Zylinderkern 33 ist antriebswirksam mit einem drehbeweglichen, axialfest gelagerten Mitnehmer 35 verbunden, an dem ein Riegel 37 einstückig angeformt ist (Fig. 5). Der Mitnehmer 35 und der Riegel 37 sind ebenfalls innerhalb der Gehäuseschale 19 aufgenommen. Der Schließbolzen 27 weist an seinem dem Mitnehmer 35 zugewandten Ende zunächst einen Hals und daran anschließend einen über den Hals radial nach außen vorstehenden Kopf auf. Der Mitnehmer 35 wiederum ist an seinem dem Schließbolzen 27 zugewandten Ende seitlich offen ausgebildet (Fig. 7) und weist an diesem Ende eine teilweise umlaufende, nach innen abkragende Schulter auf, um den Kopf des Schließbolzens 27 und damit den gesamten Schließbolzen 27 an dem Mitnehmer 35 zu halten.

Der Mitnehmer 35 und damit der Riegel 37 sind in eine verriegelnde Ruheposition (Fig. 5) vorgespannt, wodurch eine Automatikfunktion realisiert wird, welche durch eine lediglich in einer Drehrichtung drehfeste Kopplung zwischen einem Mitnehmerabschnitt des Zylinderkerns 33 und dem Mitnehmer 35 ermöglicht wird. Zur Realisierung der Vorspannung ist eine hier nicht gezeigte gebogene Mitnehmerdrehfeder vorgesehen, wie sie nachstehend in Verbindung mit einer zweiten Ausführungsform der Erfindung beschrieben ist. Die genannte Ruheposition kann jedoch nur in der Sicherungsstellung der Gehäuseschale 19 eingenommen werden. Der Mitnehmer 35, der axialfest mit der Gehäuseschale 19 gekoppelt ist, ist außerhalb der Sicherungsstellung nämlich in einer Nut 39 (Fig. 6) zwangsgeführt, die in einer im Bereich des freien Schwenkendes der Gehäuseschale 19 vorgesehenen Aufnahme 41 des Abstützabschnitts 13 für das Innengehäuse 23, für den Schließzylinder 25 und für den Schließbolzen 27 ausgebildet ist. Diese Nut 39 verhindert eine Drehbewegung des Mitnehmers 35, solange dieser nicht durch entsprechende Betätigung der Gehäuseschale 19 axial an das untere Ende der Nut 39 - also in Richtung des Aufnahmespalts 17 - bewegt worden ist.

In der Ruheposition greift der Riegel 37 zwischen eine nach innen vorstehende Auskragung 43 der Aufnahme 41 des Abstützabschnitts 13 einerseits und einen hakenförmigen Haltearm 45 andererseits ein, der mit seinem anderen Ende an einer Innenseite der Gehäuseschale 19 befestigt ist (Fig. 5). In der Ruheposition des Riegels 37 ist der Schließbolzen 27 damit verriegelt, d.h. der Schließbolzen 27 ist gegen eine axiale Bewegung aus der vorgenannten Verschlussstellung gesichert, da er oberseitig an dem axial verriegelten Mitnehmer 35 anliegt. Zugleich verhindert der Haltearm 45, dass die Gehäuseschale 19 sich zurück in die Freigabestellung bewegt.

Um den Riegel 37 aus seiner verriegelnden Ruheposition in eine unverriegelnde Auslenkposition (Fig. 7) zu überführen, wird der Riegel 37 durch eine entsprechende Drehbetätigung des Zylinderkerns 33 des Schließzylinders 25 mittels eines zugeordneten Schlüssels entgegen der Vorspannung in Richtung der Nut 39 gedreht, die eine axiale Bewegung des Mitnehmers 35 entlang der Aufnahme 41 des Abstützabschnitts 13 ermöglicht. Somit kann der an der Unterseite des Mitnehmers 35 anliegende Schließbolzen 27 sich nun aus dem Aufnahmespalt 27 herausbewegen, und die Gehäuseschale 19 kann nun aus der Sicherungsstellung in die Freigabestellung zurückschwenken.

Anstelle der erläuterten Schwenkbewegung kann natürlich auch eine rein translatorische Bewegung der Gehäuseschale 19 vorgesehen sein.

Die Gehäuseschale 19 umschließt in der Sicherungsstellung, sofern in der Sicherungsstellung in dem Aufnahmespalt 17 eine Bremsscheibe aufgenommen ist (Fig. 3), eine Bremsscheibenerkennungseinrichtung 47 des Bremsscheibenschlosses. Die Bremsscheibenerkennungseinrichtung 47 ist dafür vorgesehen, zu detektieren, ob eine Bremsscheibe sich in dem Aufnahmespalt 17 befindet. Darüber hinaus umschließt die Gehäuseschale 19 sowohl in der Freigabestellung als auch in der Sicherungsstellung eine Alarmeinrichtung 49 zum Ausgeben eines Alarmsignals. Die Alarmeinrichtung 49 umfasst einen nicht dargestellten Bewegungssensor, eine nicht bezeichnete Steuerplatine, eine nicht dargestellte Alarmausgabeeinrichtung, beispielsweise einen Lautsprecher, und ein Gehäuse 51 für wenigstens eine Batterie 53 (Fig. 5), für den Bewegungssensor und für die Steuerplatine.

Außerdem ist ein Druckschalter 55 vorgesehen, der ebenfalls in der Gehäuseschale 19 aufgenommen ist. Der Druckschalter 55 umfasst einen Schalterkörper 57, der starr an dem Gehäuse 51 der Alarmeinrichtung 49 befestigt ist, und ein Kontaktelement 59, das von der Bremsscheibenerkennungseinrichtung 47 gegen die Federkraft eines ersten Federmittels 61 und relativ zu dem Schalterkörper 57 bewegbar ist, um die Alarmeinrichtung 49 zu aktivieren. Das erste Federmittel 61 ist hier als ein Biegebalken oder alternativ beispielsweise als eine in dem Druckschalter 55 enthaltene Druckfeder ausgebildet, der bzw. die zwischen dem Schalterkörper 57 und dem Kontaktelement 59 wirkt. Bei einem Druckschalter handelt es sich allgemein um einen Schalter, der durch Drücken gegen eine Kraft, insbesondere gegen eine mechanische Federspannung, betätigt wird, um einen elektrischen Kontakt herzustellen.

Die Bremsscheibenerkennungseinrichtung 47 ist über einen Anlenkpunkt 67 an dem Schalterkörper 57 gehalten, und sie umfasst ein als Schalterwippe wirksames Schalterblech 65 mit einem gewölbten Ansatz 63. In der Freigabestellung der Gehäuseschale 19 (Fig. 1) und in der Sicherungsstellung der Gehäuseschale 19, sofern in der Sicherungsstellung in dem Aufnahmespalt 17 keine Bremsscheibe aufgenommen ist (Fig. 2), ist die Bremsscheibenerkennungseinrichtung 47 mit dem gewölbten Ansatz 63 des Schalterblechs 65 spielbehaftet zu dem Kontaktelement 59 des Druckschalters 55 angeordnet, so dass der Druckschalter 55 in den Fig. 1 und 2 nicht betätigt ist. Die Sicherungsstellung gemäß Fig. 2 ist zum Mitführen bzw. Transportieren des Bremsscheibenschlosses vorgesehen.

Das Gehäuse 51 der Alarmeinrichtung 49 und damit der daran fest angebrachte Druckschalter 55 sind sowohl relativ zu der Gehäuseschale 19 als auch relativ zu dem Schlosskörper 11 im Wesentlichen um die Schwenkachse 21 der Gehäuseschale 19 verschwenkbar.

Die Alarmeinrichtung 49 und der Druckschalter 55 sind über ein zweites Federmittel 69 (Fig. 8, 9), das als eine Druckfeder ausgebildet ist und eine größere Federkonstante aufweist als das erste Federmittel 61, mit der Gehäuseschale 19 gekoppelt. Darüber hinaus sind die Alarmeinrichtung 49 und der Druckschalter 55 über ein drittes Federmittel 71 (Fig. 8, 9), das mit dem zweiten Federmittel 69 im Wesentlichen identisch ist, mit dem Schlosskörper 11 bzw. dessen Abstützabschnitt 13 gekoppelt. Das erste Federmittel 61 und das zweite Federmittel 69 wirken in im Wesentlichen dieselbe Richtung. Durch die zweiten und dritten Federmittel 69, 71 wird eine schwimmende Lagerung der Alarmeinrichtung 49, des Druckschalters 55 und der Bremsscheibenerkennungseinrichtung 47 zwischen der Gehäuseschale 19 und dem Schlosskörper 11 erreicht.

Durch das zweite Federmittel 69 wird erreicht, dass bei der Bewegung der Gehäuseschale 19 in die Sicherungsstellung (Fig. 2, 3) die Alarmeinrichtung 49, der Druckschalter 55 und damit die Bremsscheibenerkennungseinrichtung 47 mitbewegt wird. Durch das zweite Federmittel 69, insbesondere durch das zweite Federmittel 69 und das dritte Federmittel 71, wird eine Vorspannung der Gehäuseschale 19 in die Freigabestellung und relativ zu dem Abstützabschnitt 13 erreicht. Durch das dritte Federmittel 69 wird die Alarmeinrichtung 49 und damit der Druckschalter 55 aus dem Aufnahmespalt 17 gedrängt, so dass in der Freigabestellung (Fig. 1) die an dem Schalterkörper 57 gehaltene Bremsscheibenerkennungseinrichtung 47 im Wesentlichen aus dem Aufnahmespalt 19 herausgeschwenkt ist. Durch das Zusammenwirken des zweiten Federmittels 69 mit dem dritten Federmittel 71 wird somit erreicht, dass die Bremsscheibenerkennungseinrichtung 47 erst dann in den Aufnahmespalt 17 bewegt wird, wenn die Gehäuseschale 19 in Richtung des Abstützabschnitts 13 gedrückt wird, nachdem eine Bremsscheibe in den Aufnahmespalt 17 eingeführt worden ist. Die Bremsscheibenerkennungseinrichtung 47 kann somit als ein einfaches Blechteil 65 ausgebildet sein, und muss beispielsweise nicht etwa ballig oder mit einer sonstigen besonderen Formgebung ausgeführt sein.

Das erste Federmittel 61 und das zweite Federmittel 69 sind derart aufeinander abgestimmt, dass bei der Bewegung der Gehäuseschale 19 aus der Freigabestellung in die Sicherungsstellung, sofern in dem Aufnahmespalt 17 eine Bremsscheibe aufgenommen ist (Fig. 3), auf jeden Fall der Druckschalter 55 bzw. dessen Kontaktelement 59 entgegen der Federkraft des ersten Federmittels 61 betätigt wird. Hierbei bewegt sich die Gehäuseschale 19 relativ zu der Bremsscheibenerkennungseinrichtung 47. Das in den Fig. 1 und 2 zwischen der Bremsscheibenerkennungseinrichtung 47 und dem Druckschalter 55 vorhandene Spiel wird dabei beseitigt. Eine darüberhinausgehende, verbleibende Relativbewegung zwischen der Gehäuseschale 19 und der Bremsscheibenerkennungseinrichtung 47 wird von dem zweiten Federmittel 69 aufgenommen. Durch das Zusammenwirken des ersten Federmittels 61 und des zweiten Federmittels 69 wird somit erreicht, dass für Bremsscheiben unterschiedlicher Dicke stets ein zuverlässiges Aktivieren der Alarmeinrichtung 49 gewährleistet ist.

Um eine Beschädigung des ersten Federmittels 61 zu vermeiden, ist ein Anschlag 73 für die Bremsscheibenerkennungseinrichtung 47 vorgesehen. Hierdurch wird der Federweg des ersten Federmittels 61 und damit der Teil der Relativbewegung zwischen der Gehäuseschale 19 und der Bremsscheibenerkennungseinrichtung 47, der von dem ersten Federmittel 61 aufgenommen wird, begrenzt. In der Sicherungsstellung, sofern in dem Aufnahmespalt 17 eine Bremsscheibe aufgenommen ist (Fig. 3), ist die von dem ersten Federmittel 61 ausgeübte Federkraft daher kleiner als die von dem zweiten Federmittel 69 ausgeübte Federkraft.

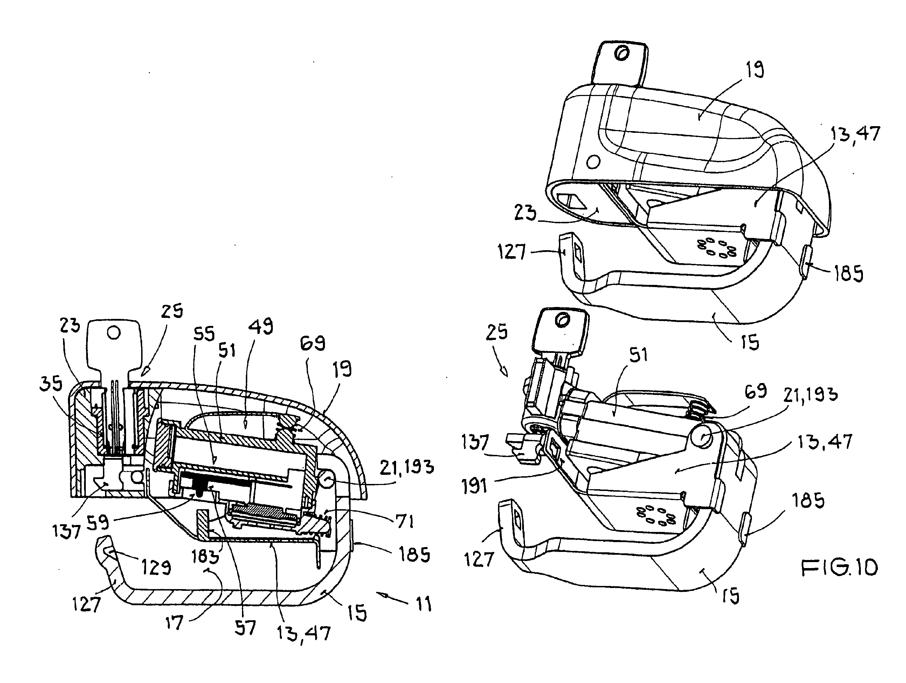

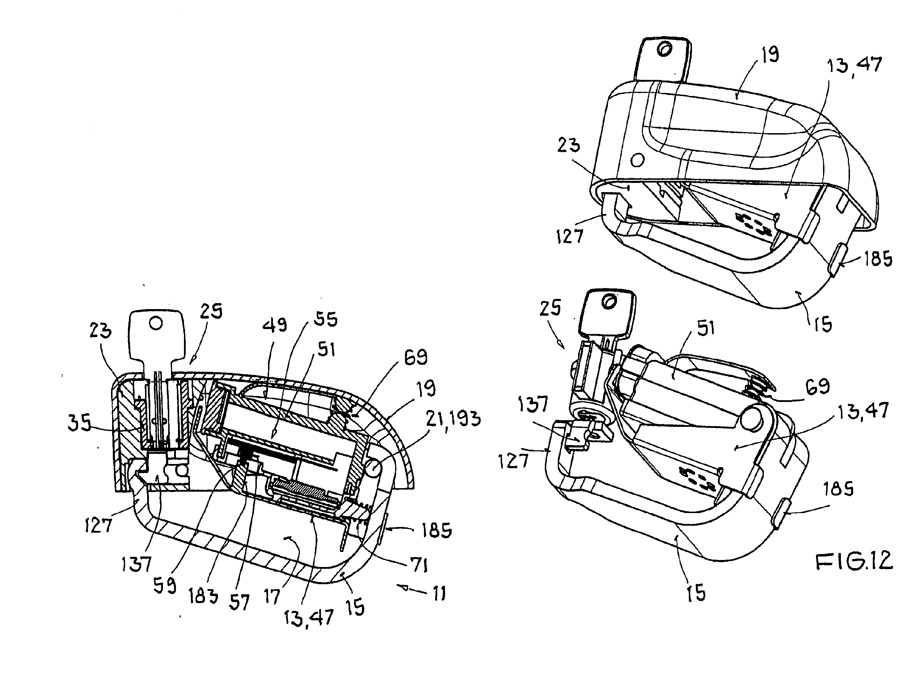

Das in den Fig. 10 bis 16 gezeigte Bremsscheibenschloss gemäß einer zweiten Ausführungsform der Erfindung entspricht im Wesentlichen dem Bremsscheibenschloss gemäß der ersten Ausführungsform, so dass einander entsprechende Teile der beiden Ausführungsformen mit denselben Bezugszeichen versehen sind. Auf eine erneute Vorstellung dieser Teile, deren Funktion und Zusammenwirken mit anderen Teilen wird verzichtet und es wird diesbezüglich auf die vorstehende Beschreibung zu dem Bremsscheibenschloss gemäß der ersten Ausführungsform verwiesen. Daher werden im Folgenden lediglich die Abweichungen der zweiten Ausführungsform gegenüber der ersten Ausführungsform erläutert.

Der Sicherungsabschnitt, der bei dem Bremsscheibenschloss gemäß der ersten Ausführungsform als der Schließbolzen 27 ausgebildet ist, entspricht bei dem Bremsscheibenschloss gemäß der zweiten Ausführungsform dem umgebogenen freien Ende 127 des Hintergreifungsbügels 15. Das freie Ende 127 des Hintergreifungsbügels 15 weist eine Ausnehmung 129 auf, in die in der Sicherungsstellung der Gehäuseschale 19 ein Riegel 137 eingreift, um das freie Ende 127 des Hintergreifungsbügels 15 zu verriegeln. Der Riegel 137 ist innerhalb der Gehäuseschale 19 und in axialer Verlängerung des Schließzylinders 25 angeordnet.

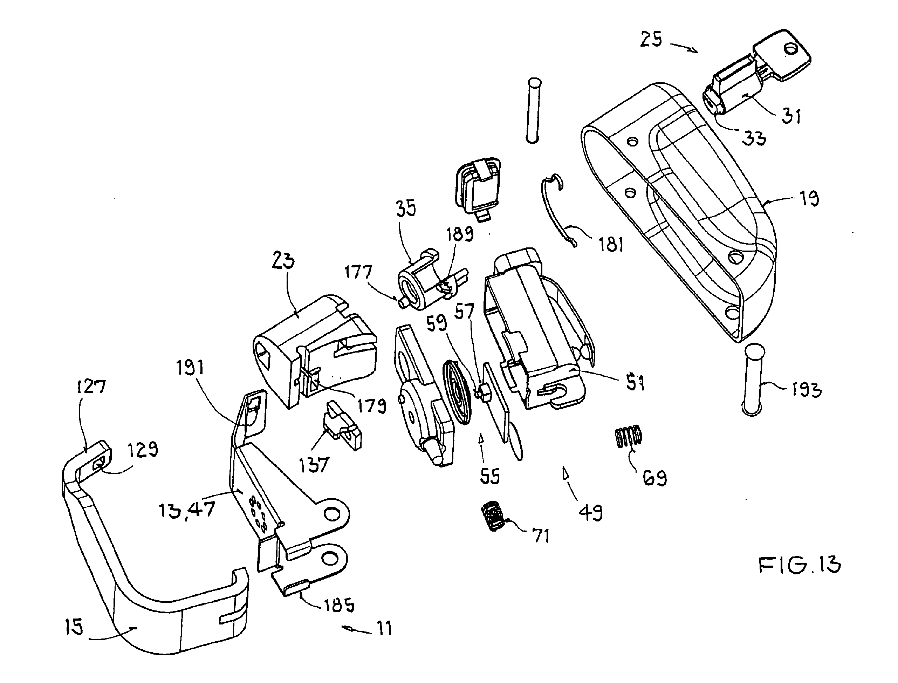

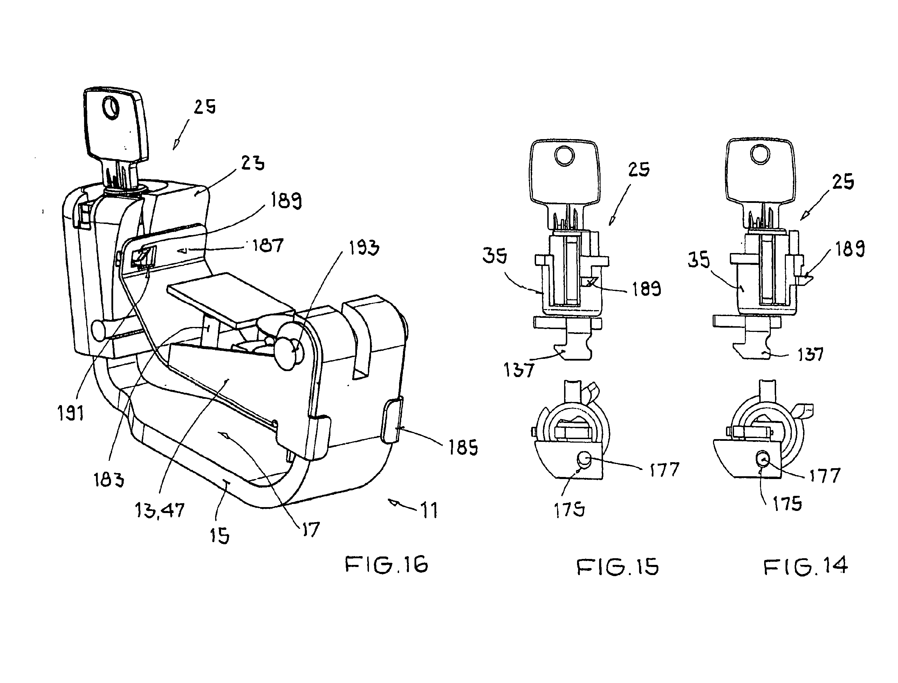

Der Riegel 137 ist über ein Langloch 175 (Fig. 14, 15) mit einem Mitnehmerzapfen 177 des Mitnehmers 35 gekoppelt und in einer in dem Innengehäuse 23 ausgebildeten Riegelführung 179 (Fig. 13) zwangsgeführt, so dass eine Drehbewegung des Zylinderkerns 33 des Schließzylinders 25 in eine lineare Bewegung des Riegels 137 senkrecht zu der Längsachse des Schließzylinders 25 umgesetzt wird, wodurch der Riegel 137 zwischen der verriegelnden Ruheposition (Fig. 14) und der unverriegelnde Auslenkposition (Fig. 15) bewegbar ist. Der Mitnehmer 35 und damit der Riegel 137 sind über eine Mitnehmerdrehfeder 181 (Fig. 13) in die verriegelnde Ruheposition vorgespannt, um die Automatikfunktion zu gewährleisten.

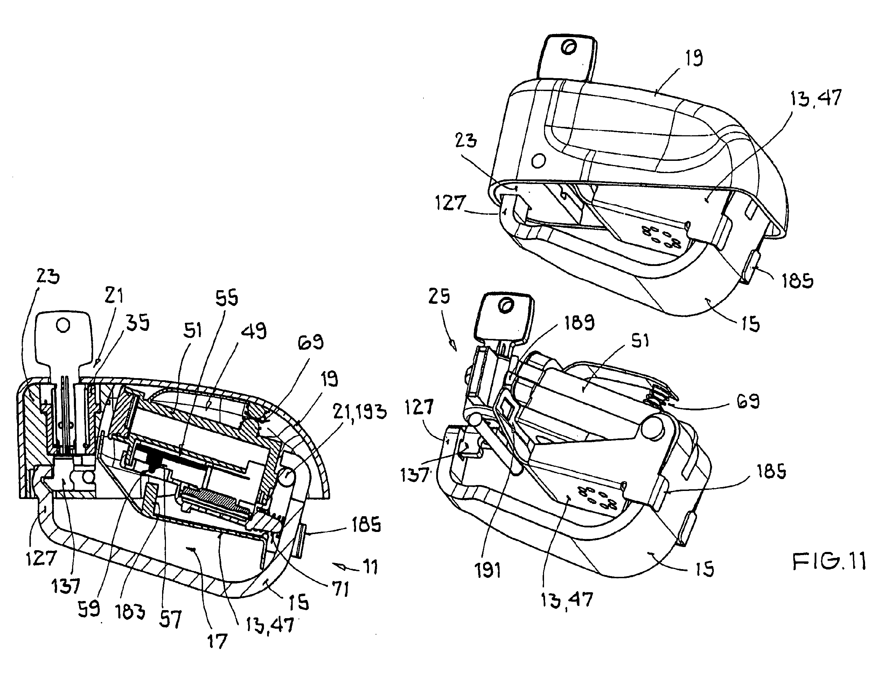

Darüber hinaus ist der Schlosskörper 11 des Bremsscheibenschlosses gemäß der zweiten Ausführungsform zweistückig ausgebildet. Der Abstützabschnitt 13 und der Hintergreifungsbügel 15 sind verschwenkbar zueinander gelagert, wobei der Abstützabschnitt 13, der Hintergreifungsbügel 15 und die Gehäuseschale 19 eine gemeinsame Schwenkachse aufweisen, die durch einen Niet 193 gebildet ist, wobei der Niet 193 im Bereich der Basis des U-förmigen Schlosskörpers 11 durch entsprechende Bohrungen in der Gehäuseschale 19 und in dem Abstützabschnitt 13 hindurchgesteckt ist. Durch die zweiteilige Ausbildung des Schlosskörpers 11 wird bei dem Bremsscheibenschloss gemäß der zweiten Ausführungsform ermöglicht, dass der Druckschalter 55 in der Sicherungsstellung der Gehäuseschale 19, sofern in dem Aufnahmespalt 17 keine Bremsscheibe aufgenommen ist (Fig. 11), nicht betätigt ist, da der Abstützabschnitt 13 bei dem Bremsscheibenschloss gemäß der zweiten Ausführungsform gleichzeitig auch der Bremsscheibenerkennungseinrichtung 47 entspricht.

An seiner dem Aufnahmespalt 17 abgewandten Seite ist an dem Abstützabschnitt 13 bzw. der Bremsscheibenerkennungseinrichtung 47 oder an einer nicht gezeigten Dichtfläche für die Alarmeinrichtung 19 ein Betätigungsstift 183 angeformt, durch den der Druckschalter 55 betätigt wird, wenn die Gehäuseschale 19 aus der Freigabestellung in die Sicherungsstellung geschwenkt wird, sofern in dem Aufnahmespalt 17 eine Bremsscheibe aufgenommen ist.

Der Druckschalter 55 gemäß der zweiten Ausführungsform ist als eine Drucktaste ausgebildet, bei der das Kontaktelement 59 mittels einer integrierten, nicht gezeigten Druckfeder, die dem ersten Federmittel und somit dem Biegebalken 61 der ersten Ausführungsform entspricht, bezüglich des Schalterkörpers 57 in Richtung einer den Druckschalter 55 nicht betätigenden Position vorgespannt ist. Diese Druckfeder (als erstes Federmittel) wirkt mit einer Druckfeder 69 (als zweites Federmittel) zusammen und ist mit dieser abgestimmt, wie im Zusammenhang mit der ersten Ausführungsform erläutert.

Da der Druckschalter 55 an dem Gehäuse 51 der Alarmeinrichtung, die ebenfalls um den Niet 193 schwenkbar ist, starr befestigt ist, sind auch der Abstützabschnitt 13 bzw. die Bremsscheibenerkennungseinrichtung 47 und der Druckschalter 55 relativ zueinander verschwenkbar. Letztendlich sind die Gehäuseschale 19, das Gehäuse 51 der Alarmeinrichtung 49, der Druckschalter 55, der Hintergreifungsbügel 15 und der Abstützabschnitt 13 bzw. die Bremsscheibenerkennungseinrichtung 47 relativ zueinander um die gemeinsame Schwenkachse 21 verschwenkbar.

Der Abstützabschnitt 13 weist zwei Mitnehmerkrallen 185 auf, die den in Richtung des Niets 193 gerichteten Abschnitt des Hintergreifungsbügels 15 umgreifen. Hierdurch wird bei der Bewegung der Gehäuseschale 19 relativ zu dem Abstützabschnitt 13 aus der Freigabestellung in die Sicherungsstellung sichergestellt, dass die Gehäuseschale 19 in im Wesentlichen entsprechender Weise relativ zu dem Hintergreifungsbügel 15 bewegt wird, oder umgekehrt. Wird der Abstützabschnitt 13 durch Drücken des Bremsscheibenschlosses in Richtung der Bremsscheibe gegen die Bremsscheibe gedrückt, wird der Hintergreifungsbügel 15 mitgenommen, wodurch der Aufnahmespalt 17 verschlossen wird. Der Abstützabschnitt 13 bzw. die Bremsscheibenerkennungseinrichtung 47 betätigt also sowohl den Hintergreifungsbügel 15 als auch den Druckschalter 55.

Das dritte Federmittel 71 stützt sich - anders als bei dem Bremsscheibenschloss gemäß der ersten Ausführungsform - nicht an dem Abstützabschnitt 13 sondern an dem Hintergreifungsbügel 15 ab, so dass die Gehäuseschale 19 relativ zu dem Hintergreifungsbügel 15 in Richtung der Freigabestellung vorgespannt ist.

Darüber hinaus ist bei dem Bremsscheibenschloss gemäß der zweiten Ausführungsform ein Arretiermechanismus 187 (Fig. 16) vorgesehen, um den Betätigungsstift 183 der Bremsscheibenerkennungseinrichtung 47 in der den Druckschalter 55 betätigenden Position zu halten. Hierzu ist an dem Mitnehmer 35 eine Mitnehmernase 189 ausgebildet, die in der verriegelnden Ruheposition des Riegels 137 in ein an dem freien Ende des Abstützabschnitts 13 ausgebildetes Fenster 191 eingreift.

Zu den beiden erläuterten Ausführungsformen ist noch anzumerken, dass anstelle einer Automatikfunktion auch eine in beiden Drehrichtungen wirksame Zwangssteuerung des Mitnehmers 35 mittels des Schließzylinders 25 vorgesehen sein kann.

### Bezugszeichenliste

- 11: Schlosskörper
- 13: Abstützabschnitt
- 15: Hintergreifungsbügel
- 17: Aufnahmespalt
- 19: Gehäuseschale
- 21: Schwenkachse
- 23: Innengehäuse
- 25: Schließzylinder
- 26: Haltezapfen
- 27: Schließbolzen
- 29: Ausnehmung
- 31: Zylindergehäuse
- 33: Zylinderkern
- 35: Mitnehmer
- 37: Riegel
- 39: Nut
- 41: Aufnahme
- 43: Auskragung
- 45: Haltearm
- 47: Bremsscheibenerkennungseinrichtung
- 49: Alarmeinrichtung
- 51: Gehäuse
- 53: Batterie
- 55: Druckschalter
- 57: Schalterkörper
- 59: Kontaktelement
- 61: erstes Federmittel
- 63: Ansatz
- 65: Schalterblech
- 67: Anlenkpunkt
- 69: zweites Federmittel
- 71: drittes Federmittel
- 73: Anschlag
- 127: freies Ende
- 129: Einnehmung
- 137: Riegel
- 175: Langloch
- 177: Mitnehmerzapfen
- 179: Riegelführung
- 181: Mitnehmerdrehfeder
- 183: Betätigungsstift
- 185: Mitnehmerkralle
- 187: Arretiermechanismus
- 189: Mitnehmernase
- 191: Fenster
- 193: Niet

## Patentansprüche

1. Bremsscheibenschloss mit einer Gehäuseschale (19), einem Abstützabschnitt (13), einem Hintergreifungsbügel (15), und einem Sicherungsabschnitt (27, 127), wobei der Abstützabschnitt (13) und der Hintergreifungsbügel (15) einen Aufnahmespalt (17) zur Aufnahme einer Bremsscheibe begrenzen, wobei die Gehäuseschale (19) bezüglich des Aufnahmespalts (17) auf derselben Seite angeordnet ist wie der Abstützabschnitt (13),
**dadurch gekennzeichnet,**
**dass** die Gehäuseschale (19) betätigbar ist, wobei die Gehäuseschale (19) an dem Abstützabschnitt (13) beweglich gelagert ist, und wobei die Gehäuseschale (19), der Abstützabschnitt (13) und der Sicherungsabschnitt (27, 127) derart zusammenwirken, dass durch eine Bewegung der Gehäuseschale (19) relativ zu dem Abstützabschnitt (13) in Richtung des Aufnahmespalts (17) die Gehäuseschale (19) aus einer Freigabestellung in eine Sicherungsstellung bewegbar ist, um den Aufnahmespalt (17) mittels des Sicherungsabschnitts (27, 127) zu verschließen.

2. Bremsscheibenschloss nach Anspruch 1,
**dadurch gekennzeichnet,**
**dass** die Gehäuseschale (19) verschwenkbar an dem Abstützabschnitt (13) gelagert ist.

3. Bremsscheibenschloss nach Anspruch 1 oder 2,
**dadurch gekennzeichnet,**
**dass** die Gehäuseschale (19) relativ zu dem Abstützabschnitt (13) und/oder dem Hintergreifungsbügel (15) in Richtung der Freigabestellung vorgespannt ist.

4. Bremsscheibenschloss nach einem der vorstehenden Ansprüche,
**dadurch gekennzeichnet,**
**dass** zumindest in der Freigabestellung eine Bremsscheibenerkennungseinrichtung (47) und/oder eine Alarmeinrichtung (49) zumindest teilweise in der Gehäuseschale (19) aufgenommen ist.

5. Bremsscheibenschloss nach einem der vorstehenden Ansprüche,
**dadurch gekennzeichnet,**
**dass** ein Riegel (37, 137) vorgesehen ist, wobei in der Sicherungsstellung der Gehäuseschale (19) der Sicherungsabschnitt (27, 127) mittels des Riegels (37, 137) verriegelt oder verriegelbar ist.

6. Bremsscheibenschloss nach Anspruch 5,
**dadurch gekennzeichnet,**
**dass** mittels des Riegels (37, 137) zugleich die Gehäuseschale (19) in der Sicherungsstellung verriegelt oder verriegelbar ist.

7. Bremsscheibenschloss nach Anspruch 5 oder 6,
**dadurch gekennzeichnet,**
**dass** innerhalb der Gehäuseschale (19), insbesondere in einem in der Gehäuseschale (19) aufgenommenen Innengehäuse (23), ein Schließzylinder (25) vorgesehen ist.

8. Bremsscheibenschloss nach Anspruch 7,
**dadurch gekennzeichnet,**
**dass** der Riegel (37, 137) durch Betätigung des Schließzylinders (25) in eine unverriegelnde Auslenkposition bewegbar ist, und dass der Riegel (37, 137) durch Betätigung des Schließzylinders (25) oder aufgrund einer Automatikfunktion in eine verriegelnde Ruheposition bewegbar ist.

9. Bremsscheibenschloss nach Anspruch 7 oder 8,
**dadurch gekennzeichnet,**
**dass** der Riegel (37, 137) und/oder der Schließzylinder (25) bezüglich der Drehachse des Schließzylinders (25) axialfest innerhalb der Gehäuseschale (19), insbesondere in einem in der Gehäuseschale (19) aufgenommenen Innengehäuse (23), gelagert ist.

10. Bremsscheibenschloss nach einem der vorstehenden Ansprüche,
**dadurch gekennzeichnet,**
**dass** die Gehäuseschale (19) als eine Handhabe ausgebildet ist, die in der Freigabestellung und/oder der Sicherungsstellung zumindest einen Teil des Abstützabschnitts (13) umgibt.

11. Bremsscheibenschloss nach einem der vorstehenden Ansprüche,
**dadurch gekennzeichnet,**
**dass** der Abstützabschnitt (13) und zumindest ein Teil des Hintergreifungsbügels (15) einstückig ausgebildet und/oder starr miteinander verbunden sind.

12. Bremsscheibenschloss nach einem der Ansprüche 1 bis 10,
**dadurch gekennzeichnet,**
**dass** der Hintergreifungsbügel (15) verschwenkbar an dem Abstützabschnitt (13) gelagert ist.

13. Bremsscheibenschloss nach Anspruch 12,
**dadurch gekennzeichnet,**
**dass** der Hintergreifungsbügel (15), die Gehäuseschale (19) und der Abstützabschnitt (13) eine gemeinsame Schwenkachse aufweisen, und/oder
**dass** der Abstützabschnitt (13) Mitnehmermittel (185) umfasst, die bei der Bewegung der Gehäuseschale (19) relativ zu dem Abstützabschnitt (13) eine entsprechende Bewegung des Hintergreifungsbügels (15) relativ zur der Gehäuseschale (19) bewirken, um den Aufnahmespalt (17) durch den Sicherungsabschnitt (27, 127) zu schließen.

14. Bremsscheibenschloss nach einem der vorstehenden Ansprüche,
**dadurch gekennzeichnet,**
**dass** der Sicherungsabschnitt (27, 127) als ein Schließbolzen (27) ausgebildet ist, der durch die Bewegung der Gehäuseschale (19) in axialer Richtung antreibbar ist, insbesondere über ein in der Gehäuseschale (19) aufgenommenes Innengehäuse (23).

15. Bremsscheibenschloss nach einem der Ansprüche 1 bis 13,
**dadurch gekennzeichnet,**
**dass** der Sicherungsabschnitt (27, 127) an dem freien Ende (127) des Hintergreifungsbügels (15) ausgebildet ist.

## Claims

1. A brake disk lock having a housing shell (19), a support section (13), an engagement hoop (15), and a securing section (27, 127), wherein the support section (13) and the engagement hoop (15) bound a receiving gap (17) for the receiving of a brake disk, wherein the housing shell (19) is arranged on the same side as the support section (13) with respect to the receiving gap (17), **characterized in that** the housing shell (19) is actuable, wherein the housing shell (19) is movably supported at the support section (13), and wherein the housing shell (19), the support section (13) and the securing section (27, 127) cooperate such that the housing shell (19) is movable from a release position into a securing position by a movement of the housing shell (19) relative to the support section (13) in the direction of the receiving gap (17) to close the receiving gap (17) by means of the securing section (27, 127).

2. A brake disk lock in accordance with claim 1, **characterized in that** the housing shell (19) is pivotably supported at the support section (13).

3. A brake disk lock in accordance with claim 1 or claim 2, **characterized in that** the housing shell (19) is preloaded in the direction of the release position relative to the support section (13) and/or the engagement hoop (15).

4. A brake disk lock in accordance with any one of the preceding claims, **characterized in that** a brake disk recognition device (47) and/or an alarm device (49) is at least partly received in the housing shell (19) at least in the release position.

5. A brake disk lock in accordance with any one of the preceding claims, **characterized in that** a latch (37, 137) is provided, with the securing section (27, 127) being latched or latchable by means of the latch (37, 137) in the securing position of the housing shell (19).

6. A brake disk lock in accordance with claim 5, **characterized in that** the housing shell (19) is at the same time latched or latchable in the securing position by means of the latch (37, 137).

7. A brake disk lock in accordance with claim 5 or claim 6, **characterized in that** a lock cylinder (25) is provided within the housing shell (19), in particular in an inner housing (23) received in the housing shell (19).

8. A brake disk lock in accordance with claim 7, **characterized in that** the latch (37, 137) is movable into an unlatching deflected position by actuation of the lock cylinder (25); and **in that** the latch (37, 137) is movable into a latching rest position by actuation of the lock cylinder (25) or on the basis of an automatic function.

9. A brake disk lock in accordance with claim 7 or claim 8, **characterized in that** the latch (37, 137) and/or the lock cylinder (25) is supported axially fixedly within the housing shell (19) with respect to the axis of rotation of the lock cylinder (25), in particular in an inner housing (23) received in the housing shell (19).

10. A brake disk lock in accordance with any one of the preceding claims, **characterized in that** the housing shell (19) is made as a handle which surrounds at least a part of the support section (13) in the release position and/or in the securing position.

11. A brake disk lock in accordance with any one of the preceding claims, **characterized in that** the support section (13) and at least a part of the engagement hoop (15) are made in one piece and/or are rigidly connected to one another.

12. A brake disk lock in accordance with any one of the claims 1 to 10, **characterized in that** the engagement hoop (15) is pivotably supported at the support section (13).

13. A brake disk lock in accordance with claim 12, **characterized in that** the engagement hoop (15), the housing shell (19) and the support section (13) have a common pivot axis;
and/or
**in that** the support section (13) includes catch means (185) which, on the movement of the housing shell (19) relative to the support section (13), bring about a corresponding movement of the engagement hoop (15) relative to the housing shell (19) to close the receiving gap (17) by the securing section (27, 127).

14. A brake disk lock in accordance with any one of the preceding claims, **characterized in that** the securing section (27, 127) is made as a striker pin (27) which can be driven in the axial direction by the movement of the housing shell (19), in particular via an inner housing (23) received in the housing shell (19).

15. A brake disk lock in accordance with any one of the claims 1 to 13, **characterized in that** the securing section (27, 127) is formed at the free end (127) of the engagement hoop (15).

## Revendications

1. Cadenas de frein à disque comprenant une coque de boîtier (19), une portion de soutien (13), un arceau d'engagement par l'arrière (15), et une portion de blocage (27, 127), dans lequel la portion de soutien (13) et l'arceau d'engagement par l'arrière (13) délimitent une fente de réception (17) pour la réception d'un disque de frein, dans lequel la coque de boîtier (19) est agencée par rapport à la fente de réception (17) du même côté que la portion de soutien (13),
**caractérisé en ce que**
la coque de boîtier (19) est susceptible d'être actionnée, ladite coque de boîtier (19) étant montée déplaçable sur la portion de soutien (13), et la coque de boîtier (19), la portion de soutien (13) et la portion de blocage (27, 127) coopèrent ensemble de telle façon que par un déplacement de la coque de boîtier (19) en direction de la fente de réception (17) la coque de boîtier (17) est déplaçable depuis une position de libération jusque dans une position de blocage afin de refermer la fente de réception (17) au moyen de la portion de blocage (27, 127).

2. Cadenas de frein à disque selon la revendication 1,
**caractérisé en ce que** la coque de boîtier (19) est montée en pivotement sur la portion de soutien (13).

3. Cadenas de frein à disque selon la revendication 1 ou 2,
**caractérisé en ce que** la coque de boîtier (19) est précontrainte par rapport à la portion de soutien (13) et/ou à l'arceau d'engagement par l'arrière (15) en direction de la position de libération.

4. Cadenas de frein à disque selon l'une des revendications précédentes, **caractérisé en ce que**, au moins dans la position de libération, un dispositif de reconnaissance de disque de frein (47) et/ou un dispositif d'alarme (49) est reçu au moins partiellement dans la coque de boîtier (19).

5. Cadenas de frein à disque selon l'une des revendications précédentes, **caractérisé en ce qu'**il est prévu un verrou (37, 137) et, dans la position de blocage de la coque de boîtier (19), la portion de blocage (27, 127) est verrouillée ou susceptible d'être verrouillée au moyen du verrou (37, 137).

6. Cadenas de frein à disque selon la revendication 5,
**caractérisé en ce que** la coque de boîtier (19) est simultanément verrouillée ou susceptible d'être verrouillée dans la position de blocage au moyen du verrou (37, 137).

7. Cadenas de frein à disque selon la revendication 5 ou 6,
**caractérisé en ce qu'**il est prévu un cylindre de fermeture (25) à l'intérieur de la coque de boîtier (19), en particulier dans un boîtier intérieur (23) reçu dans la coque de boîtier (19).

8. Cadenas de frein à disque selon la revendication 7,
**caractérisé en ce que** le verrou (37, 137) est déplaçable par actionnement du cylindre de fermeture (25) jusque dans une position pivotée sortie déverrouillée, et **en ce que** le verrou (37, 137) est déplaçable par actionnement du cylindre de fermeture (25) ou en raison d'une fonction automatique, dans une position de repos verrouillée.

9. Cadenas de frein à disque selon la revendication 7 ou 8,
**caractérisé en ce que** le verrou (37, 137) et/ou le cylindre de fermeture (25) est monté de manière axialement fixe à l'intérieur de la coque de boîtier (19) par rapport à l'axe de rotation du cylindre de fermeture (25), en particulier dans un boîtier intérieur (23) reçu dans la coque de boîtier (19).

10. Cadenas de frein à disque selon l'une des revendications précédentes,
**caractérisé en ce que** la coque de boîtier (19) est réalisée comme une manette qui entoure au moins une partie de la portion de soutien (37) dans la position de libération et/ou dans la position de blocage.

11. Cadenas de frein à disque selon l'une des revendications précédentes,
**caractérisé en ce que** la portion de soutien (13) et au moins une partie de l'arceau d'engagement par l'arrière (15) sont réalisées d'une seule pièce et/ou sont reliées rigidement l'une à l'autre.

12. Cadenas de frein à disque selon l'une des revendications 1 à 10, **caractérisé en ce que** l'arceau d'engagement par l'arrière (15) est monté en pivotement sur la portion de soutien (13).

13. Cadenas de frein à disque selon la revendication 12,
**caractérisé en ce que** l'arceau d'engagement par l'arrière (15), la coque de boîtier (19) et la portion de soutien (13) présentent un axe de pivotement commun, et/ou
**en ce que** la portion de soutien (13) comprend des moyens d'entraînement (185) qui, lors du déplacement de la coque de boîtier (19) par rapport à la portion de soutien (13), entraînent un déplacement correspondant de l'arceau d'engagement par l'arrière (15) par rapport à la coque de boîtier (19) afin de fermer la fente de réception (17) par la portion de blocage (27, 127).

14. Cadenas de frein à disque selon l'une des revendications précédentes,
**caractérisé en ce que** la portion de blocage (27, 127) est réalisée sous la forme d'un goujon de fermeture (27) qui peut être entraîné en direction axiale par le déplacement de la coque de boîtier (19), en particulier via un boîtier intérieur (23) reçu dans la coque de boîtier (19).

15. Cadenas de frein à disque selon l'une des revendications 1 à 13, **caractérisé en ce que** la portion de blocage (27, 127) est réalisée à l'extrémité libre (127) de l'arceau d'engagement par l'arrière (15).
